Europäisches Patentamt

European Patent Office

Office européen des brevets

(19)

(11) Publication number: **0 010 434**
**B2**

(12) # NEW EUROPEAN PATENT SPECIFICATION

(45) Date of publication of the new patent specification: **20.01.88**

(51) Int. Cl.⁴: **C 08 L 53/00, C 08 L 23/04**

(21) Application number: **79302260.9**

(22) Date of filing: **18.10.79**

(54) **Polyolefin resin composition.**

(30) Priority: **19.10.78 JP 129155/78**

(43) Date of publication of application:
**30.04.80 Bulletin 80/09**

(45) Publication of the grant of the patent:
**16.06.82 Bulletin 82/24**

(45) Mention of the opposition decision:
**20.01.88 Bulletin 88/03**

(84) Designated Contracting States:
**BE DE FR GB IT NL**

(56) References cited:
**AT-B- 291 556**
**DE-A-2 700 774**
**DE-A-2 801 217**
**NL-A-7 700 174**
**NL-A-7 800 474**
**US-A-3 937 758**
**US-A-3 954 704**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Sekine, Noriyuki**
**No. 135, Iriyamazu**
**Ichihara-shi Chiba-ken (JP)**
Inventor: **Tanaka, Shigeo**
**No. 9 Yushudai nishi 1-chome**
**Ichihara-shi Chiba-ken (JP)**
Inventor: **Tanaka, Kazuo**
**No. 9 Yushudai nishi 1-chome**
**Ichihara-shi Chiba-ken (JP)**

(74) Representative: **Allard, Susan Joyce et al**
**BOULT, WADE & TENNANT 27 Furnival Street**
**London EC4A 1PQ (GB)**

EP 0010434 B2

# 0 010 434

**Description**

The present invention relates to a polyolefin resin composition having good resistance to blushing on impact and good gloss, as well as high impact resistance and high stiffness. The polyolefin resin composition of the invention comprises a specific ethylene/propylene block copolymer and a specific polyethylene or a specific copolymer of ethylene and an α-olefin having 3 or more carbon atoms.

Polypropylene is widely used in various fields because of its excellent mechanical properties. Particularly ethylene/propylene block copolymer has both high impact resistance and high stiffness, and hence it is widely used for the production of injection molded products. However, ethylene/propylene block copolymer usually produces molded products having poor gloss, and furthermore, when a molded ethylene/propylene block copolymer product suffers impact or bending, the portion experiencing the impact or bending whitens. This phenomenon is called blushing, and significantly lowers the value of the product.

The polyolefin resin composition of the present invention comprises a physical mixture of:

(A) an ethylene/propylene block copolymer consisting essentially of at least one first segment of an ethylene/propylene copolymer having an ethylene content of from 1.0 to 2.0% by weight, and at least one second segment of an ethylene/propylene copolymer having an ethylene content of from 15 to 35% by weight, the said at least one second segment constituting from 10 to 30% by weight, preferably from 10 to 25% by weight based on the weight of the block copolymer (A), and,

(B) a polymer of ethylene, which is polyethylene or a copolymer of ethylene with an α-olefin having 3 or more carbon atoms, which has a density of from 0.93 to 0.97 g/cm$^3$ and a melt flow index of 6.0 to 50 g/10 minutes at 190°C, the weight ratio of the weight of the polymer of ethylene (B) to the said second segment of the block copolymer (A) being from 0.7 to 2.2.

Certain mixtures of block copolymers of ethylene/propylene and polyethylene are known, for example those disclosed in Patent Specification AT—B—291556, but that Specification does not include any indication or suggestion of the essential features of this invention.

The ethylene/propylene block copolymer (A) may consist essentially of a single first segment and a single second segment or either or both of the segments may be repeated, e.g. each segment may be repeated twice. The first segment may consist of a portion of a polymer of propylene having an ethylene content of substantially zero and a portion of a copolymer of ethylene and propylene, subject only that it satisfies the requirement that the ethylene content is from 1.0 to 2.0% by weight. The ethylene/propylene block copolymer can be produced by conventional processes, for example, by a process as described in Japanese Patent Publication No. 25585/1978.

The polymer of ethylene (B) is a polyethylene or a copolymer of ethylene and an α-olefin having 3 or more carbon atoms, preferably from 3 to 5 carbon atoms, such as propylene, 1-butene, and 1-pentene. The polymer of ethylene (B) has a density of 0.93 to 0.97 g/cm$^3$, preferably 0.94 to 0.97 g/cm$^3$, at 23°C, and a melt flow index of 6.0 to 50 g/10 minutes at 190°C. The polymer of ethylene can be produced by conventional processes, for instance, a process as described in High Polymers, Vol. XX (Interscience).

The polyolefin resin composition of the present invention should comprise the specified ethylene/propylene block copolymer (A) having the specified ethylene content in each segment and the specified polymer to ethylene (B) having the specified density and melt flow index and should also have the specified ratio of the weight of the ethylene polymer (B) to the weight of the second segment of the block copolymer (A) in order to produce the desired properties.

When the ethylene content of the first segment of the ethylene/propylene block copolymer is smaller than 1.0% by weight, the blushing on impact and the gloss of the product are insufficiently improved, and on the other hand when the ethylene content of the first segment is larger than 2.0% by weight, the stiffness of the product is significantly decreased, and other properties of the ethylene/propylene block copolymer are impaired. When the ethylene content of the second segment of the ethylene/propylene block copolymer is smaller than 15% by weight or larger than 90% by weight, the impact resistance of the product is significantly decreased, and when the ethylene content of the second segment is from 35 to 65% by weight, the blushing on impact of the product is insufficiently improved. Besides, when the second segment is present in the copolymer (A) in a proportion of smaller than 10% by weight based on the weight of the ethylene/propylene block copolymer (A), the product shows inferior impact resistance, and on the other hand, when the second segment is present in the copolymer (A) in a proportion larger than 30% by weight the product has a low stiffness.

Furthermore, when the polymer of ethylene (B) has a density of smaller than 0.93 g/cm$^3$, the composition produced has low stiffness, and when the polymer of ethylene (B) has a melt flow index of smaller than 6.0 g/10 minutes, the product has poor gloss. Moreover, when the ratio of the weight of the polymer of ethylene (B) to the weight of the second segment of the block copolymer (A) is smaller than 0.70, the blushing on impact of the product is insufficiently improved and the gloss of the product deteriorates somewhat. On the other hand, when the said ratio is larger than 2.2, the blushing on impact and gloss of the product are not significantly improved, and undesirable effects appear when molded products are produced from the composition, for example, peeling during injection molding.

The mixing of the ethylene/propylene block copolymer (A) and the polymer of ethylene (B) can be

2

carried out using apparatus conventionally used for melt mixing, for example a screw extruder, a heat roll, a Bambury mixer, or the like.

Other additives may also be incorporated in the composition of the present invention, such as deterioration preventing agents, weathering agents, nucleating agents, antistatic agents, colourants, fillers or the like, depending on the use for which the composition is intended.

In the present invention, the various physical and chemical properties of the composition are measured by the following methods.

(1) Ethylene content of the ethylene/propylene block copolymer:

A sheet is formed from the copolymer using a heat press, and the infrared spectrum of the sheet is measured at an optical density of 736 cm$^{-1}$ and 722 cm$^{-1}$.

(2) Proportion of each segment in the ethylene/propylene block copolymer:

The heat of melting of the first segment alone and the heat of melting of the first segment in the ethylene/propylene block copolymer are measured by using a differential scanning calorimeter (made by Parkin Elmer Co.). The proportion of each segment is calculated from the difference of the data thus obtained.

(3) Melt flow index:

This is measured in accordance with the method described in ASTM D 1238—62T, using a melt indexer (made by Takara Kogyo K.K.).

(4) Density:

A sheet of the polymer having a thickness of 0.5 mm is formed using a heat press, and the density of the sheet is measured in accordance with the method described in Japanese Industrial Standard K 6758—1968, using a direct-reading density meter (made by Shibayama Kagaku Kiki).

(5) Gloss:

A sheet having a thickness of 1 mm is formed from the composition, using a screw in-line type injection molding machine (IS 80A, made by Toshiba Kikai K.K.). The gloss of the sheet is measured at a reflextance of 45°, using a gloss meter (made by Murakami Shikisai Kenkyusho).

(6) Drop-weight impact test:

The same sheet as used in test (5) is subjected to a drop-weight impact test, using a Du Pont impact tester (made by Toyo Seiki K.K.). The test is carried out at −20°C using a missile having a tip curvature radius of $\frac{1}{4}$ inch and a weight, and the breakage per falling energy level is calculated. The results are shown as the energy at a breakage of zero.

(7) Area of blushing on impact:

In the same manner as in the above drop-weight impact test, a weight of 1 kg is allowed to fall from a height of 10 cm, and after 5 days, the area of whitened portion is measured.

(8) Stiffness modulus:

A sheet having a thickness of 1 mm formed by a heat press is subjected to the test in accordance with the method as described in ASTM D 747—58T, using an Olsen type stiffness tester (made by Toyo Seiki K.K.).

The present invention is illustrated by the following Examples but is not limited thereto. In the Examples, parts by weight, unless specified otherwise.

Examples 1 to 3 and Reference Examples 1 to 4

In the first stage, a mixture of ethylene and propylene which contained in a small amount of hydrogen was polymerized in a fixed amount in n-heptane in the presence of a catalyst consisting of titanium trichloride and diethylaluminum chloride, and thereafter, hydrogen, ethylene and propylene were removed under reduced pressure. In the second stage, a mixture of ethylene and propylene which contained a small amount of hydrogen and a larger amount of ethylene than that in the first stage was polymerized in a fixed amount. After the polymerization, n-butanol was added to the polymerization mixture to deactivate the catalyst, and then, the mixture was centrifuged to remove n-heptane and polymer soluble therein and dried to give a powdery ethylene/propylene block copolymer. The ethylene/propylene block copolymer thus obtained had an intrinsic viscosity $(\eta)_{tetralin}^{135°C}$ of 2.5 dl/g, an ethylene content in the first segment of 1.0% by weight, an ethylene content in the second segment of 30% by weight, and a proportion of the second segment to whole polymer of 18% by weight.

The ethylene/propylene block copolymer obtained above was mixed with polyethylene having a density of 0.965 g/cm$^3$ at 23°C and a melt flow index of 6 g/10 minutes at 190°C in a mixing ratio as shown in Table 1 with a Henschel mixer. To the mixture were also added Sumilizer BHT (Registered Trade Mark) and

3

# 0 010 434

calcium stearate as a stabilizer and aluminium p-tert-butylbenzoate as a nucleating agent in an amount of 0.2 part and 0.3 part respectively per 100 parts of the whole resin.

The above mixture was melt-kneaded with a screw type extruder and formed into pellets, and various properties of the pellets were measured. The results are shown in Table 1.

TABLE 1

| Example No. | Mixing ratio (part) | | | Gloss (%) | Area of blushing on impact $(mm^2)$ | Drop-weight impact strength (kg·cm) | Stiffness modulus $(kg/cm^2)$ |
|---|---|---|---|---|---|---|---|
| | Ethylene/ propylene block copolymer | Poly-ethylene | R | | | | |
| Example 1 | 85 | 15 | 0.98 | 90 | 87 | 97 | 8400 |
| Example 2 | 80 | 20 | 1.39 | 96 | 72 | 98 | 8200 |
| Example 3 | 75 | 25 | 1.85 | 97 | 56 | 95 | 8400 |
| Reference Example 1 | 100 | 0 | 0 | 85 | 180 | 68 | 8800 |
| Reference Example 2 | 95 | 5 | 0.29 | 80 | 170 | 87 | 8800 |
| Reference Example 3 | 90 | 10 | 0.62 | 83 | 140 | 95 | 8600 |
| Reference Example 4 | 65 | 35 | 2.99 | 96 | 50 | 90 | 8100 |

[Remark]: In the product of Reference Example 4, peeling was observed on the surface of the injected molded product.

# 0 010 434

### Example 4 and Reference Examples 5 and 6

In the same manner as described in Examples 1 to 3, there were obtained ethylene/propylene block copolymers having an intrinsic viscosity $(\eta)^{135°C}_{tetralin}$ of 2.5 dl/g, various ethylene contents in the first segment, an ethylene content in the second segment of 23% by weight, and a proportion of the second segment to whole polymer of 18% by weight.

In the same manner as described in Examples 1 to 3, the ethylene/propylene block copolymers obtained above (each 80 parts) were mixed with the polyethylene as used in Examples 1 to 3 (20 parts) and formed into pellets, on which various properties were measured. The results are shown in Table 2.

TABLE 2

| Example No. | Ethylene content in the first segment (% by weight) | Gloss (%) | Area of blushing on impact (mm²) | Dropweight impact strength (kg·cm) | Stiffness modulus (kg/cm²) |
|---|---|---|---|---|---|
| Example 4 | 2.0 | 98 | 47 | 86 | 7600 |
| Reference Example 5 | 0 | 91 | 136 | 72 | 9200 |
| Reference Example 6 | 4 | 99 | 31 | 90 | 5600 |

### Examples 5 to 7 and Reference Examples 7 and 9

In the same manner as described in Examples 1 to 3, there were obtained ethylene/propylene block copolymers having an intrinsic viscosity $(\eta)^{135°C}_{tetralin}$ of 2.5 dl/g, an ethylene content in the first segment of 1% by weight, various ethylene contents in the second segment, and a proportion of the second segment to whole polymer of 18% by weight.

In the same manner as described in Examples 1 to 3, the ethylene/propylene block copolymers (each 80 parts) were mixed with the polyethylene as used in Examples 1 to 3 (20 parts) and formed into pellets, on which various properties were measured. The results are shown in Table 3.

TABLE 3

| Example No. | Ethylene content in the second segment (% by weight) | Gloss (%) | Area of blushing on impact (mm²) | Dropweight impact strength (kg·cm) | Stiffness modulus (kg/cm²) |
|---|---|---|---|---|---|
| Example 5 | 18 | 97 | 45 | 62 | 8900 |
| Example 6 | 35 | 95 | 80 | 106 | 8200 |
| Example 7 | 75 | 94 | 67 | 110 | 8400 |
| Reference Example 7 | 8 | 99 | 18 | 4 | 10100 |
| Reference Example 8 | 50 | 93 | 172 | 110 | 8000 |
| Reference Example 9 | 95 | 90 | 21 | 20 | 9900 |

### Examples 8 to 10 and Reference Examples 10 and 11

In the same manner as described in Examples 1 to 3, there were obtained ethylene/propylene block copolymers having an intrinsic viscosity $(\eta)^{135°C}_{tetralin}$ of 2.5 dl/g, an ethylene content in the first segment of 1% by weight, an ethylene content in the second segment of 30% by weight, and various proportions of the second segment to the whole of the polymer.

In the same manner as described in Examples 1 to 3, the ethylene/propylene block copolymers

6

obtained above were mixed with the polyethylene as used in Examples 1 to 3 such that their weight ratio was 1.5, and formed into pellets, on which various properties were measured. The results are shown in Table 4.

TABLE 4

| Example No. | Ratio of the second segment (% by weight) | Gloss (%) | Area of blushing on impact (mm²) | Dropweight impact strength (kg·cm) | Stiffness modulus (kg/cm²) |
|---|---|---|---|---|---|
| Example 8 | 12 | 98 | 76 | 68 | 9000 |
| Example 9 | 18 | 97 | 72 | 101 | 8200 |
| Example 10 | 25 | 96 | 66 | 108 | 7700 |
| Reference Example 10 | 7 | 99 | 73 | 17 | 9800 |
| Reference Example 11 | 35 | 92 | 68 | 112 | 5900 |

Examples 11 to 14 and Reference Examples 12 and 13

The ethylene/propylene block copolymer as obtained in Examples 1 to 3 (80 parts) was mixed with the polyethylene as shown in Table 5 (20 parts) and formed into pellets, on which various properties were measured. The results are shown in Table 5.

TABLE 5

| Example No. | Density of polyethylene (g/cm³) | Melt flow ratio of polyethylene (g/10 minutes) | Gloss (%) | Area of blushing on impact (mm²) | Dropweight impact strength (kg·cm) | Stiffness modulus (kg/cm²) |
|---|---|---|---|---|---|---|
| Example 11 | 0.965 | 6 | 97 | 72 | 98 | 8200 |
| Example 12 | 0.965 | 20 | 96 | 71 | 86 | 8200 |
| Example 13 | 0.950 | 7 | 97 | 75 | 97 | 7900 |
| Example 14 | 0.934 | 8 | 96 | 73 | 103 | 7700 |
| Reference Example 12 | 0.950 | 0.3 | 65 | 85 | 89 | 8000 |
| Reference Example 13 | 0.919 | 7 | 94 | 82 | 108 | 6600 |

**Claims**

1. A polyolefin resin composition which comprises a physical mixture of (A) an ethylene/propylene block copolymer consisting essentially of at least one first segment of an ethylene/propylene copolymer having an ethylene content of from 1.0 to 2.0% by weight, and at least one second segment of an ethylene/propylene copolymer having an ethylene content of from 15 to 35% by weight, the said at least one second segment constituting from 10 to 30% by weight of the block copolymer (A), and (B) a polymer of ethylene, which is polyethylene or a copolymer of ethylene with a α-olefin having 3 to more carbon atoms, and which has a density of from 0.93 to 0.97 g/cm³ and a melt flow index of 6.0 to 50 g/10 minutes at 190°C, the weight ratio of the polymer of ethylene (B) to the said second segment of the block copolymer (A) being 0.7 to 2.2.

2. A polyolefin resin composition as claimed in Claim 1 wherein the said at least one second segment constitutes from 10 to 25% by weight of the block copolymer (A).

7

3. A polyolefin resin composition as claimed in Claim 1 or Claim 2 wherein the polymer of ethylene (B) is a polyethylene having a density of from 0.94 to 0.97 g/cm$^3$ at 23°C and a melt flow index of from 6.0 to 50 g/10 minutes at 190°C.

4. A polyolefin resin composition as claimed in any one of the preceding claims, wherein the polymer of ethylene (B) is a copolymer of ethylene with propylene, 1-butene, or 1-pentene.

**Patentansprüche**

1. Polyolefinharz-Zusammensetzung enthaltend ein durch physikalische Mischung erzeugtes Gemisch aus

(A) einem Äthylen/Propylen -Blockcopolymerisat, das im wesentlichen aus mindestens einem ersten Abschnitt aus einem Äthylen/Propylen-Copolymerisat mit einem Äthylengehalt von 1,0 bis 2,0 Gew.-% besteht und aus mindestens einem zweiten Abschnitt aus einem Äthylen/Propylen-Copolymerisat mit einem Äthylengehalt von 15 bis 35 Gew.-% oder von 65 bis 90 Gew.-%, wobei der vorstehende mindestens ein zweiter Abschnitt 10 bis 30 Gew.-% des Blockcopolymerisats (A) ausmacht und

(B) einem Äthylenpolymerisat, das aus Polyäthylen oder einem Copolymerisat von Äthylen mit einem α-Olefin mit drei oder mehr Kohlenstoffatomen besteht, und das eine Dichte von 0,93 bis 0,97 g/cm$^3$ und einen Schmelzindex von 6,0 bis 50 g/10 min bei 190°C aufweist, wobei das Gewichtsverhältnis des Äthylenpolymerisats (B) zum obengenannten zweiten Abschnitt des Blockcopolymerisats (A) 0,7 bis 2,2 begrägt.

2. Polyolefinharz-Zusammensetzung nach Anspruch 1 dadurch gekennzeichnet, daß der genannte, mindestens ein zweiter Abschnitt 10 bis 25 Gew.-% des Blockcopolymerisats (A) ausmacht.

3. Polyolefinharz-Zusammensetzung nach Anspruch 1 oder 2, dadurch gekennzeichnet, daß das Äthylenpolymerisat (B) ein Polyäthylen ist, mit einer Dichte von 0,94 bis 0,97 g/cm$^3$ bei 23°C und mit einem Schmelzindex von 6,0 bis 50 g/10 min bei 190°C.

4. Polyolefinharz-Zusammensetzung nach jedem der vorstehenden Patentansprüche, dadurch gekennzeichnet, daß das Äthylenpolymerisat (B) ein Äthylencopolymerisat mit Propylen, 1-Buten oder 1-Penten ist.

**Revendications**

1. Composition de résine de polyoléfine qui comprend un mélange physique de:

A) Un copolymère séquencé d'éthylène/propylène contitué essentiellement d'au moins un premier segment d'un copolymère d'éthylène/propylène ayant une teneur en éthylène comprise entre 1,0 et 2,0% en poids, et au moins un second segment d'un copolymère éthylène/propylène ayant une teneur en éthylène comprise entre 15 et 35% en poids, le second segment constituant entre 10 et 30% en poids du copolymère séquencé A, et de:

B) Un polymère d'éthylène; qui est du polyéthylène ou un copolymère d'éthylène avec une α-oléfine ayant 3 ou plus atomes de carbone, et qui a une densité comprise entre 0,93 et 0,97 g/cm$^3$ et un indice d'écoulement à l'état fondu compris entre 6,0 et 50 g/10 minutes à 190°C, le rapport entre le poids du polymère d'éthylène A et le poids du second segment du copolymère séquencé A étant compris entre 0,7 et 2,2.

2. Composition de résine de polyoléfine selon la revendication 1 dans laquelle le second segment constitue entre 10 et 25% en poids du copolymère séquencé A.

3. Composition de résine de polyoléfine selon la revendication 1 ou la revendication 2, dans laquelle le polymère d'éthylène B est un polyéthylène ayant une densité comprise entre 0,94 et 0,97 g/cm$^3$ à 23°C et un indice d'écoulement à l'ècoulement à l'état fondu compris entre 6,0 et 50 g/10 minutes à 190°C.

4. Composition de résine de polyoléfine selon l'une quelconque des revendications précédentes, dans laquelle le polymère d'éthylène B est un copolymère d'éthylène avec le propylène, le 1-butène ou le 1-pentène.